# EUROPEAN PATENT SPECIFICATION

(11) **EP 2 409 558 B1**
(45) Date of publication and mention of the grant of the patent: **13.02.2013**
(21) Application number: 11171046.3
(22) Date of filing: 22.06.2011
(51) Int. Cl.: A01C 7/08, A01C 7/10

(54) **Product dispensing apparatus and control method for such**
Produktausgabevorrichtung und Steuerverfahren dafür
Appareil de distribution de produits et procédé de contrôle de celui-ci

(30) Priority: 30.06.2010 US 827023
(43) Date of publication of application: 25.01.2012
(73) Proprietor: Deere & Company, Moline, IL 61265-8098 (US)
(72) Inventor: Tevs, Nikolai, Fargo, ND 58104 (US); Liu, James Z., Belvidere, IL 61008 (US)
(74) Representative: Reichert, Christian

(56) References cited:
- DE-A1- 10 338 005
- DE-A1-102006 031 277
- DE-A1-102007 048 941
- US-A1- 2010 264 163
- US-B1- 6 192 813

## Description

This invention relates to a product dispensing apparatus, in particular an agricultural seeding and fertilizing implement, comprising: a tank for product to be dispensed; a meter controlling the flow of product from the tank; an distribution system for distributing product from the meter; a product passage extending between the meter and the distribution system, the product passages having first and second opposite sides; a sensor located along the product passage to sense the flow of product from the meter; and a controller having a user input and operably connected to the sensor and to the meter for automatically controlling the meter in response to user input and the output from the sensor. The sensor has at least one radiation emitter on the first side of the product passage, at least one of radiation receivers on the second side of the product passage, each of the at least one of radiation receivers generating an electrical output signal indicative of the flow rate of the product through the product passage, and a radiation control device to direct radiation into the at least one of receivers substantially perpendicular to the second side of the product passage. The invention further relates to a method of controlling a product flow rate in such a product dispensing apparatus.

A product dispensing apparatus, such as an agricultural air seeder, is well known and it has always been an object for the man skilled in the art to improve and facilitate the functionality and precision of such dispensing apparatus.

DE 10 2007 048 941 A1 discloses an arrangement for counting seed on a seed distribution system of an agricultural seeder. The arrangement comprises sensing system with radiation emitters and radiation receivers which are arranged within a measuring cell for detecting seed passing said cell. The disclosure is directed to the improvement of maintenance of such measuring systems.

It is therefore an object of the invention to provide a product dispensing apparatus with improved and facilitated functionality and precision, and further to provide a control method for its use.

The object will be achieved by the teaching of claim 1 and 12. Further advantageous embodiments are described within the accompanying claims.

Accordingly a product dispensing apparatus of the above mentioned type is provided with a controller determining a flow rate of the product by analysis of spikes in the output signals of the at least one of radiation receivers, wherein the signal strength and the time duration of each signal are considered for determination of the flow rate. Furthermore, the method applied to said product dispensing apparatus providing a sensor in the product passage, the sensor having at least one radiation emitter on the first side of the product passage, a plurality of radiation receivers on the second side of the product passage, each radiation receiver generating an electrical output signal indicative of the flow rate of the product through the product passage, and a radiation control device to direct radiation into the receivers substantially perpendicular to the second side of the product passage;providing a controller having a user input and operably connected to the sensor and to the meter for automatically controlling the meter in response to user input and the output signals from the radiation receivers; analyzing the output signal from the receivers to determine an actual product flow rate; comparing the actual product flow rate to a desired product flow rate; and controlling the meter to produce the desired product flow rate.

A product dispensing apparatus and method of dispensing a product is provided and described below. One application of such and apparatus and method is in an agricultural air seeder. In the Figures:
Fig. 1 is a side elevation view of an agricultural air seeder;
Fig. 2 is a schematic diagram of the air seeder and control system;
Figs. 3-6 are sectional views of various embodiments of the sensor;
Fig. 7 is a graph showing seed counts versus sensor channel for each of a low, a medium and a high rate product application;
Fig. 8 is a graph of seed count versus time for one sensor channel for each of a low, a medium and a high rate product application;
Fig. 9 is an example of the output signal for one radiation receiver; and
Fig. 10 is a graph of signal output voltage versus application rate for various products.

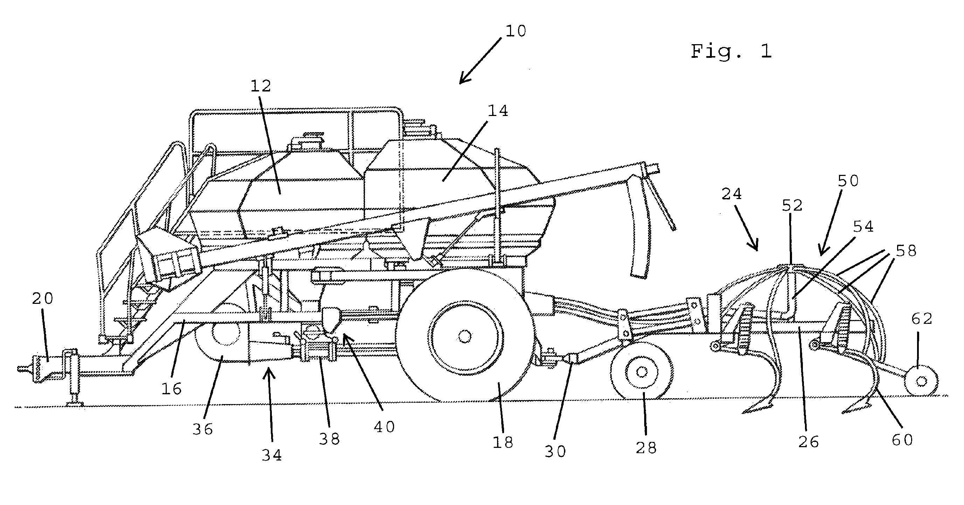

Referring to Fig. 1, therein is shown an agricultural seeding and fertilizing implement 10 commonly referred to as an air seeder. Implement 10 includes tanks 12 and 14 for containing materials to be distributed to the soil. The tanks 12 and 14 are mounted on a frame 16 supported by ground wheels 18 for forward movement over the ground by a towing vehicle (not shown) connected to a forward hitch 20. A ground-engaging implement 24 includes a frame 26 supported by ground wheels 28 and connected to the rear of the frame 16 by a hitch 30. Alternative arrangements may place the ground engaging implement in front of the air seeder or the air seeder and the ground engaging implement can be combined onto a common frame. The tanks 12 and 14 can be any suitable device for holding the material to be dispensed. They could be hoppers, bins, boxes, containers, etc. The term "tank" shall be broadly construed herein.

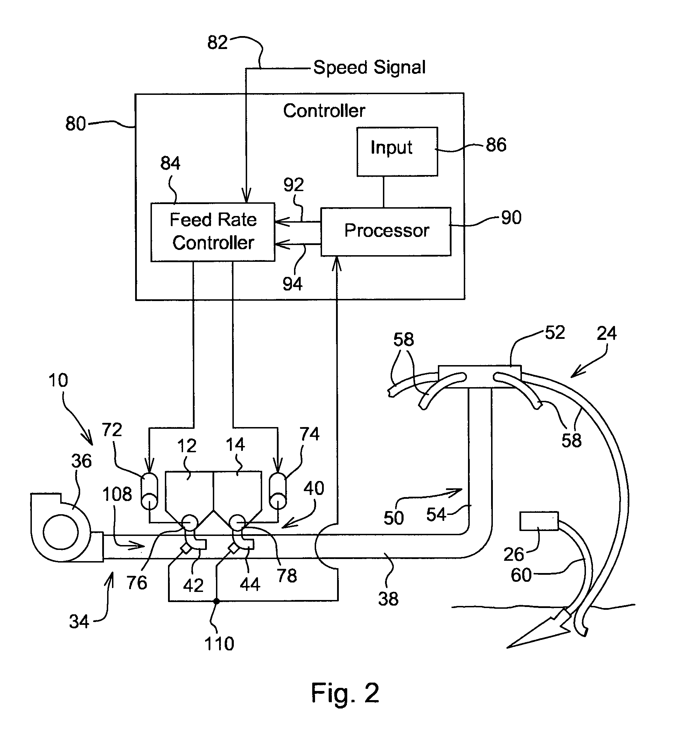

An air distribution system 34 includes a fan 36 connected and a product delivery conduit structure 38. The fan 36 directs air through the conduit structure 38. A product metering mechanism 40, located at the bottom of each tank 12 and 14, only one of which is shown in Fig. 1, delivers the products from the tanks 12 and 14 through product passages 42 and 44 into the product delivery conduit structure 38. The particular type of meter is not important to the apparatus, however, in most instances, the meter will be a volumetric meter. The delivery conduit structure 38 consists of a plurality of individual conduits beneath each meter with separate product passages 42 or 44 directing product into each conduit. An example of such a distribution system is the John Deere 1910 Commodity Air Cart which is shown in detail in US Patent No. 6,213,698. Each conduit carries product rearwardly in the air stream to a secondary distribution tower 50. Typically, there will be one tower 50 for each conduit of the conduit structure. Each tower 50 includes an uppermost distributing head 52 located at the uppermost end of a vertical distribution tube 54. The head 52 evenly divides the flow of product into a number of secondary distribution lines 58. Each secondary distribution line 58 delivers product to a furrow formed by one of a plurality of openers 60 attached to the frame 26 at transversely spaced locations. A trailing firming or closing wheel 62 associated with each opener 60 firms the soil over the material deposited in the furrow. The implement 10 may be equipped with separate conduit structures 38 for each of the tanks 12 and 14 whereby different products can be distributed separately. Alternatively, the products from tanks 12 and 14 can be combined in a common conduit structure 38 as shown in Fig. 2 for distribution together. In other embodiments of the distribution system, the conduits may be selectively configurable to combine the products from tanks 12 and 14 into common conduits or to not combine the products. While two tanks 12 and 14 are shown with the associated metering mechanisms 40 and conduit structures 38, it will be understood that any number of tanks, etc. can be provided on the implement 10 as desired.

The product metering mechanisms 40 include variable speed meter drives 72 and 74 (Fig. 2) connected to product meters 76 and 78 located in the bottom of the tanks 12 and 14 respectively. As the drives 72 and 74 rotate the meters 76 and 78, products from the tanks 12 and 14 are delivered via product passages 42 and 44 into the conduit structure 38 which, in turn, conveys the products to the distribution towers 50. A feed rate controller 84 connected to the variable speed meter drives 72 and 74 receives a speed signal at input 82 indicative of implement ground speed and adjusts the meter drive speeds to maintain a selected product flow rate with changing ground speed. An operator input device 86 is included in controller 80 for entering a desired product flow rate such as seeds per acre or pounds per acre, etc. The device 86 can include a GPS-based system or other automated system to provide desired metering rates to a processor 90 depending upon location within the field. The processor 90 provides rate control inputs to the controller 80 at 92 and 94. An operator and/or the feed rate controller 84 utilizes the speed signal and the inputs from the processor 90 to adjust the drives 72 and 74 to maintain the desired flow rates as more fully described below.

Product flow signals are provided by meter output sensors 108 located at each product passage 42 and 44 between the meters 76 and 78 and the conduit structure 38. A meter output sensor 108 is provided for each of the product passages 42 and each of the product passages 44 to measure product flow therethrough. Alternatively, fewer sensors 108 can be used with the signals from the sensors that are present used as a proxy for the product flow in passages that do not have a sensor. Use of fewer sensors will reduce the accuracy and limit the functionality of the system but will reduce cost. The sensors 108 are of the type described in copending US patent application number 12/270,317 and as described herein.

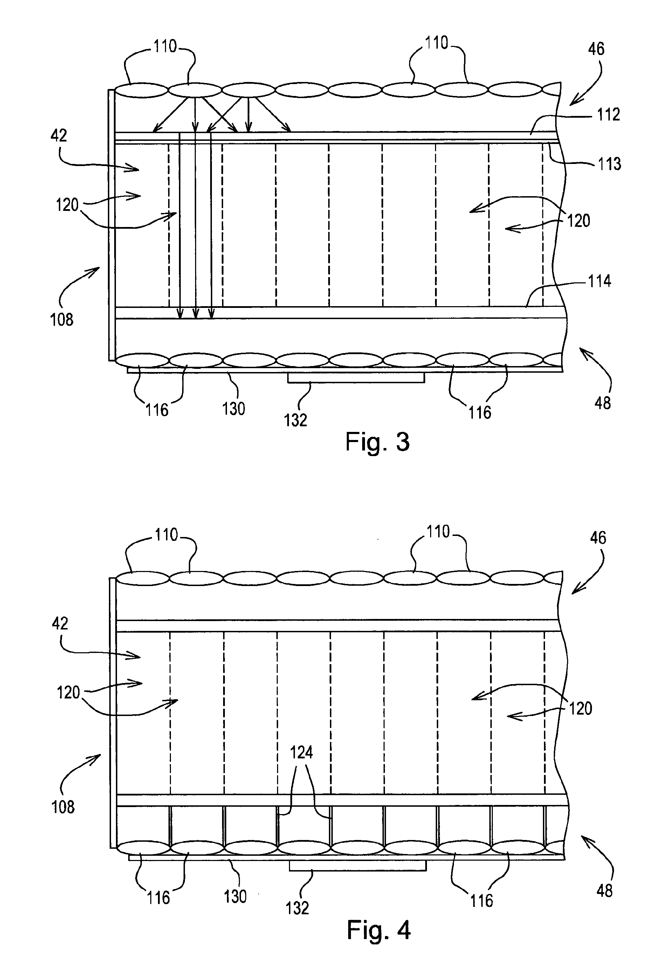

A sensor 108 is shown in cross-section in Fig. 3 in its most simple form. Sensor 108 is disposed along product passage 42 and includes a radiation emitter shown in Fig. 3 as an array of radiation emitters 110 on one side 46 of the passage 42. One or more emitters can be used. The emitter are mounted to a printed circuit board (not shown) to support the emitters and to provide electric power to the emitters. The emitters 110 may be LEDs that emit radiation in the visible light range of the frequency spectrum. Other emitters can be used such as infrared, ultraviolet, microwave, etc. The radiation from the emitters is directed through a cover 112 and into the product passage 42. On the opposite side 48 of the passage 42, the radiation travels through a second cover 114 before being detected by a radiation receiver 116. An array of receivers 116 is provided on the opposite side of the product passage 42 from the emitters 110. The receivers are appropriately selected for the type of emitter 110 that is used. In the case of an LED emitter, a photo detector is used as the receiver 116. The covers 112 and 114 serve to define the passage 42 and separate the product from the sensor emitters and receivers. The cover 112 includes or consists of a radiation control device that directs the radiation from the emitters 110 into substantially parallel columns or channels across the passage 42. One form of radiation control device is a privacy filter 113 such as that made by the 3M Company and described in US patent No. 6,398,370. The filter 113 could be applied to the cover 112 as shown in Fig. 3 or the cover 112 could be entirely made of the filter material. Other types of radiation control devices can be used including but not limited to those shown in US patents No. 4,342 ,821; 4,553,818; 4,621,898; 5,204,160; 5,528,319; 5,795,643; 7,428,367; 7,467,873; 7,573,642; or 7,595,934. The particular structure of the radiation control device is not critical as long as it performs the desired function in the space allotted.

The radiation receivers 116 each generate an electrical output signal 118 that is indicative of the product flow rate through the respective product passage 42 or 44. The output signal could be voltage, current or power. Each receiver 116 defines a channel 120 for the collimated radiation from the emitters 110. In one embodiment, sixteen receivers 116 are provided for a product passage 42 having a width of 80mm. This results in each channel 120 having a width of 5 mm. A width of each channel 120 determines the resolution of the sensor 108. Dependent upon the particular product application, different resolutions may be desired. The resolution described above, works well for an agricultural air seeder with a variety of seed types including small seeds such as canola (rapeseed).

With reference to Fig. 4, another embodiment of the sensor 108 is shown. Here, instead of a privacy filter on the cover 112 to form a radiation control device, the receivers 116 are separated from one another by a series of dividers 124 which restrict the radiation incident upon any given receiver 116 to radiation directed in a substantially perpendicular path to the array of receivers 116, that is, substantially perpendicular to the side of the passage 42 containing the receiver array. The dividers 124 form tunnels extending between the cover 114 and the receivers 116. The length of the dividers and the spacing between the dividers determines how effective the dividers are as radiation control devices in collimating the radiation. Another type of radiation control device is an array of convex lenses on either or both sides 46, 48 of the passage 42 to direct the radiation across the passage into columns and or to limit radiation passing to the receivers to radiation flowing in columns.

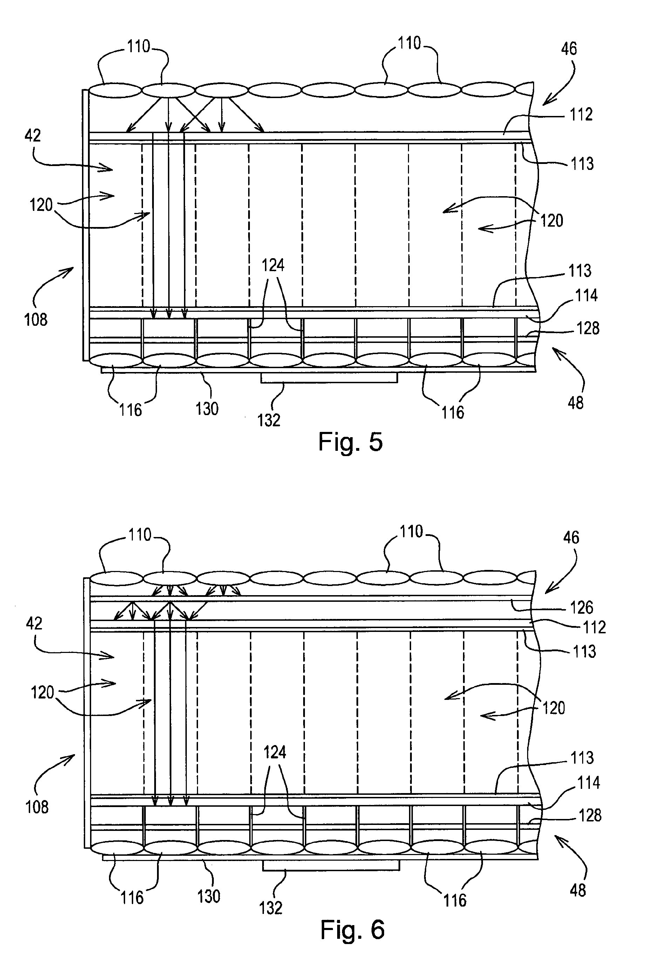

In yet another embodiment of the sensor 108 shown in Fig. 5, the cover 112 is provided with a privacy filter 113 and dividers 124 are also provided to both serve as the radiation control device to direct the radiation into the receivers substantially perpendicular to the side of the product passage. The cover 114 can also be equipped with the privacy filter 113 to further ensure that radiation received by the receivers 116 is limited to radiation directed perpendicular to the passage side.

Accuracy of the sensor is increase by evenly distributing the radiation across the width of each channel 120. To ensure even distribution of the radiation, a diffuser 126 (Fig. 6) can be placed between the emitters 110 and the cover 112. Additionally, a second diffuser 128 can be placed between the cover 114 and the receivers 116. The diffusers 126 and 128 should be suitably matched to the type of radiation produced by the emitters 110. In the case of a visible light emitter, any of a variety of optical diffusers can be used including ground glass diffusers, Teflon diffusers, holographic diffusers, opal glass diffusers, greyed glass diffusers etc.

The radiation receivers 116 for each product passage 42 are mounted to a printed circuit board 130. A micro-controller 132 is also mounted to the printed circuit board and receives the electric output signal from each receiver to perform initial processing of the signal. The microcontroller 132 includes a CAN-bus interface to the controller 80. This allows the sensor 108 to communicate with the controller 80 over a minimum of wires. Other types of communication buses can be used if desired. Wireless communication is also possible.

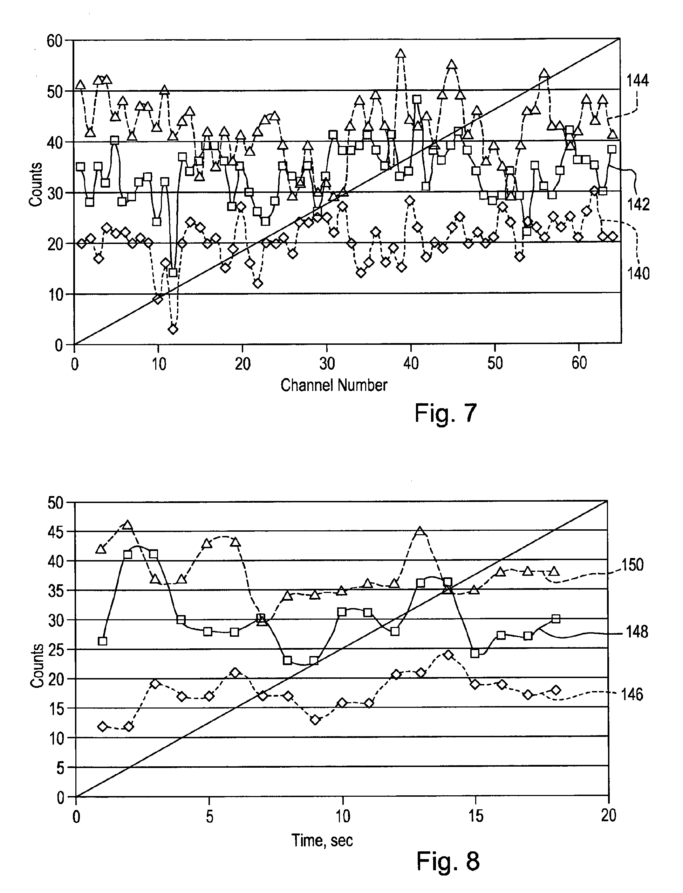

When the implement is used to distribute seed at a relatively low rate or seed that is very small, the sensor 108 operates by counting the pulses or spikes in the output voltage signal of each receiver over a given period of time, for example, one second. Fig. 7 is a graph showing seed count values for one second for different rates of canola. Line 140 is for a low seeding rate, line 142 is for a medium seeding rate and line 144 is for a high seeding rate. For each line, 64 data points are shown. These points represent seed counts for sixteen receivers 116 in each of four sensors 108 with one sensor in each of four product passages 42. A seed count is shown for each channel for each of the three seeding rates. With reference to Fig 8, one channel is shown with the seed counts over time, in this example a seed count is shown every second over an eighteen second time period. Three lines are again shown, line 146 is for a low seeding rate, line 148 is for a medium seeding rate and line 150 is a high seeding rate.

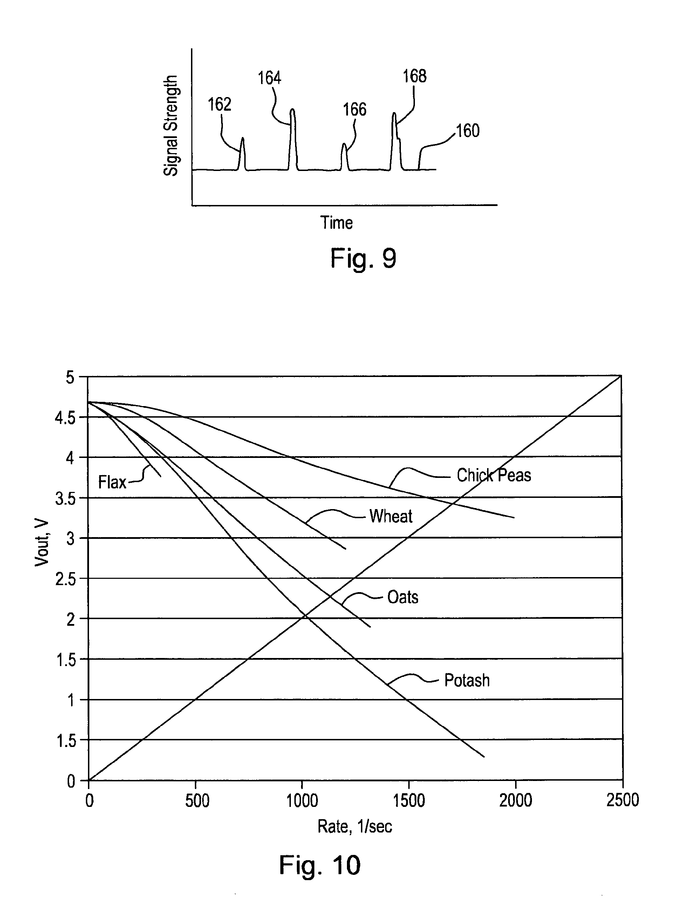

The seed counts are determined by analyzing the spikes in the signal from each receiver 116. With reference to Fig. 9, an example signal 160 is shown from one receiver 116. The signal strength varies over time in response to the passage of seeds through the passage 42, 44. The first peak 162 is the signal change caused by the passage of a single seed. The peak 164 shows a greater change in the signal strength but has a time duration is similar to peak 162. Peak 164 represents two seeds falling together side-by-side. Peak 166 on the other hand is approximately the same height as the peak 162 but is wider. This represents two seeds following one right after the other. Peak 168 shows to seize following side by side quickly followed by a third seed following thereafter. The width and height of the peaks will vary with the size and shape of a particular seed type.

In operation, a seed count over a given time, for each channel in a given sensor 108, i.e. a product passage 42, are summed to determine the total seed count for that time period. For example, with reference again to Fig. 7 the total seed count for the low rate seeding line 140, for the first 16 channels, or receivers, is 304 seeds. Thus, for the passage 42 in which that sensor 108 is located, 304 seed passed in the time period. Additionally, the controller could take a given channel, such as the channel shown in Fig. 8 and average the seed counts over a longer period of time, such as the eighteen seconds shown, to determine a channel average over that time period. Using the low seeding rate line 146, the average over the time shown is 17.5 seeds per second. The channel averages for each channel of the sensor can then be summed to determine a total sensor seed count over the time period.

For higher seeding rate crops, larger seed size crops or for dry fertilizer application, in addition to or al an alternative to counting particles, the attenuation or change in the sensor output signal can be used to indicate the product flow rate. An output signal with no product flow is determined first. Then with a product flow, the change in the output signal for each channel/receiver is measured. With reference to Fig. 10, changes in the output signal versus application rate are shown for various seeds and one fertilizer. In this example, the output signal is a voltage signal. The seeds in this example include chickpeas, flax, oats and wheat. The fertilizer is potash. As Fig. 10 illustrates, there is a strong correlation between signal attenuation and the application rate. The signals represented in Fig. 10 are for a single channel. The total application rate can be determined by averaging the signal attenuation of the individual channels in the sensor to determine the sensor average attenuation. This value is then correlated to the product application rate.

Actual seed counts are made with low application rates for certain seeds. Overall signal attenuation is used to determine a mass flow rate for higher application rates. There is an intermediate seeding rate at which the both a seed count and a signal attenuation may be used to measure the flow rate. In such an instance, the application rate as determined by counting the seeds and the mass application rate by signal attenuation are both used to correct one another and determine the application rate. The two values are combined with each factor being weighted. The seed count is weighted higher at lower application rates whereas the signal attenuation weighting gradually increases and the seed count value is weighted gradually less as the application rate increases.

In operation, the user inputs into the controller 80 the type of product and the desired application rate through the input device 86. The application rate may be in seeds per acre or pounds per acre. If the sensor is detecting seed counts and the desired rate is in pounds per acre, the operator will need to input the seeds per pound of the commodity. This information may be supplied with the seed. The controller monitors the output signals of the sensors 108 to determine the actual application rate and then adjusts the meter drives 72 and 74 to achieve the desired application rate in a closed loop system. The controller and sensors 108 avoid the need for a separate calibration process that has previously been required to calibrate the meter for the particulate product being applied. Such a calibration process typically required rotating the meter a given number of revolutions while capturing the product metered. The captured product is then weighed to determine the application rate per revolution of the meter in pounds per revolution. This information was then input into the controller which then determines the meter speed to achieve the desired application rate. Such a process is time-consuming and often inaccurate, particularly when using a seed that was relatively light weight. Variation in compaction of the product in the tank can also cause errors in the application rate after the calibration process is completed. Thus, the calibration process would need to be repeated periodically during operation of the implement 10. Eliminating the need for such a calibration process improves the machine efficiency.

Recent developments in air seeders have resulted in what is known as "sectional control" where the flow of product from the meter is selectively shout off in a given product passage 42 and/or 44. With the use of the sensor 108 in the product passages 42 and 44, the controller 80 can verify that the flow has actually been stopped in the given product passage by monitoring the output of the sensor 108 for that product passage. Additionally, if there is a blockage in the tank that starves the meter for product, or a meter malfunction such that product stops flowing from the meter, the sensors 108 will detect a cessation in product flow and alert the operator accordingly.

When in the machine/sensor is turned on, the initial voltage from each receiver can be used to test if all of the sensor channels are in good shape, i.e., no damage of sensors, no dirt covering a portion of the sensor covers 112, 114 etc. Since there are 16 channels in each product passage, in practical operation, a certain number of the channels could be non-operational. The operator may not want to stop operation to clean or repair the sensors as long as some of the channels/receivers in the sensor are still functional. The sensor is able to generate an alarm to the operator that some of the receivers are not operational but the processor can estimate the total product application rate from the data generated in those channels that are still operational. While this is not optimal in terms of precise measuring the application rate, there may be instances where approaching bad weather, nightfall, need to finish a given field, etc. dictate the need to continue application with reduced accuracy.

The sensor 108, by collimating the radiation and then using multiple receivers has a fine resolution that enables the counting of individual particles or seeds at low seeding rates. This applies even when locating the sensor immediately after the meter, before any further divisions of the particle flow takes place such as at the towers 54. Locating a sensor on the secondary distribution lines 58 reduces the number of seeds or particles that each sensor must count. A benefit of locating the sensor in the passages 42, 44 is that only a single commodity will be present in any given passage. In contrast, seeds and fertilizer may be mixed together at the secondary distribution lines making it more complex to measure any one material.

Another novel aspect of the sensor 108 is the use of signal attenuation from a sensor to determine mass flow rate. Signal attenuation has been used to detect flow or no flow be sensing a change in the signal. As shown in Fig. 10, the attenuation in the signal can be used to determine the mass flow rate with good accuracy, that is, the ability to distinguish different material flow rates from the signal attenuation. This may be limited to higher application rates or certain large particles or seed. Canola seed is very small and may not produce much attenuation in the signal as the rate changes. Thus, using signal attenuation for canola will likely not work well. In one form then, a sensor using signal attenuation to determine material mass flow rate is provided. This could be done using a collimated radiation source as described above or a sensor field having only one receiver can also be used with the attenuation in the output signal used to determine the total mass flow. This may not be as accurate as the use of collimated radiation but may have sufficient accuracy with some products.

While in the preferred mode of operation, the controller will automatically control the meter drives to produce the desired output rate, an open loop system could be provided in which the controller 80 has an output display that shows the desired application rate compared to the actual application rate and leaves it to the operator to manually adjust the meter drive speed to achieve the desired application rate.

Having described the preferred embodiment, it will become apparent that various modifications can be made without departing from the scope of the invention as defined in the accompanying claims.

## Claims

1. A product dispensing apparatus, in particular an agricultural seeding and fertilizing implement (10), comprising: a tank (12, 14) for product to be dispensed; a meter (76, 78) controlling the flow of product from the tank (12, 14); a distribution system (34) for distributing product from the meter (76, 78); a product passage (42, 44) extending between the meter (76, 78) and the distribution system (34), the product passages (42, 44) having first and second opposite sides (46, 48); a sensor (108) located along the product passage (42, 44) to sense the flow of product from the meter (76, 78); and a controller (80) having a user input (86) and operably connected to the sensor (108) and to the meter (76, 78) for automatically controlling the meter (76, 78) in response to user input (86) and the output from the sensor (108), the sensor (108) having at least one radiation emitter (110) on the first side (46) of the product passage (42, 44), at least one of radiation receivers (116) on the second side (48) of the product passage (42, 44), each of the at least one of radiation receivers (116) generating an electrical output signal indicative of the flow rate of the product through the product passage (42, 44), and a radiation control device (113, 124) to direct radiation into the at least one of receivers (116) substantially perpendicular to the second side (48) of the product passage (42, 44), **characterized in that** the controller (80) is adapted to determines a flow rate of the product by analysis of spikes (162, 164, 166, 168) in the output signals (160) of the at least one of radiation receivers (116), wherein the signal strength and the time duration of each signal are considered for determination of the flow rate.

2. The apparatus of claim 1 wherein the sensor (108) has a plurality of radiation emitters (110) and, for each emitter (110), a plurality of radiation receivers (116).

3. The apparatus of claim 1 or 2 wherein the controller (80) determines a flow rate of the product additionally by attenuation of the output signals (160) from the at least one of radiation receivers (116).

4. The apparatus of one of the claims 1 to 3 wherein the sensor (108) is operably connected to the controller (80) via a CAN bus.

5. The apparatus of one of the claims 1 to 4 wherein the radiation control device (113, 124) is located on an emitter side of the sensor (108).

6. The apparatus of one of the claims 1 to 5 wherein the radiation control device (113, 124) is located on the receiver side of the sensor (108).

7. The apparatus of one of the claims 1 to 6 further comprising a radiation control device (113, 124) on both the emitter and the receiver sides of the sensor (108).

8. The apparatus of one of the claims 1 to 7 wherein the radiation control device (113) is a filter, in particular a film, placed over at least one of the emitter (110) and receiver (116).

9. The apparatus of one of the claims 1 to 7 wherein the radiation control device (124) is a tunnel between extending between the product passage (42, 44) and each radiation receiver (116).

10. The apparatus of one of the claims 1 to 9 wherein the controller (80) includes a processor (90) programmed to average the output signals of the plurality of radiation receivers (116) or of each of the at least one of the radiation receivers (116) over a predetermined time period.

11. The apparatus of one of the claims 1 to 10 wherein the controller (80) includes a processor (90) programmed to calculate a receiver average output signal of each of the at least one of radiation receivers (116) over a predetermined time period and then determine a sensor average output signal by calculating an average of the receiver average output signals of the at least one of the radiation receivers (116), wherein the product flow rate is determined at least in part by attenuation of the sensor average output signal.

12. A method of controlling a product flow rate in a product dispensing apparatus, in particular an agricultural seeding and fertilizing implement (10), the product dispensing apparatus having a tank (12, 14) for product to be dispensed, a meter (76, 78) for controlling the flow of product from the tank (12, 14), a distribution system (34) for distributing product from the meter (76, 78), a product passage (42, 44) extending between the meter (76, 78) and the air distribution system (34) having first and second opposite sides (46, 48), the method comprising the steps of:
providing a sensor (108) in the product passage (42, 44), the sensor (108) having at least one radiation emitter (110) on the first side (46) of the product passage (46, 48), at least one of radiation receivers (116) on the second side (48) of the product passage (42, 44), each of the at least one radiation receiver (116) generating an electrical output signal (160) indicative of the flow rate of the product through the product passage (42, 44), and a radiation control device (113, 124) to direct radiation into the receivers (116) substantially perpendicular to the second side (48) of the product passage (42, 44); providing a controller (80) having a user input (86) and operably connected to the sensor (108) and to the meter (76, 78) for automatically controlling the meter (76, 78) in response to user input (86) and the output signals (160) from the at least one of radiation receivers (116); analyzing the output signal (160) from the at least one of receivers (116) to determine an actual product flow rate; comparing the actual product flow rate to a desired product flow rate; and controlling the meter (76, 78) to produce the desired product flow rate,
**characterized in that** the controller (80) determines a flow rate of the product by analysis of spikes (162, 164, 166, 168) in the output signals of the at least one of radiation receivers (116)), wherein the signal strength and the time duration of each signal are considered for determination of the flow rate.

13. The method of claim 12 wherein the controller (80) determines a flow rate of the product by analysis of spikes (162, 164, 166, 168) in the output signals of the at least one of radiation receivers (116) additionally by attenuation of the output signal from the at least one of radiation receivers (116).

14. The method of claim 12 or 13 wherein the controller includes a processor (90) programmed to average the output signals of the plurality of the at least one of radiation receivers (116) or of each of the at least one of radiation receivers (116) over a predetermined time period.

15. The method of claim one of the claims 12 to 14 wherein the controller (80) includes a processor (90) programmed to calculate a receiver average output signal of each of a plurality of radiation receivers (116) over a predetermined time period and then determine a sensor average output signal by calculating an average of the receiver average output signals of the plurality of radiation receivers (116), wherein the product flow rate is determined at least in part by attenuation of the sensor average output signal.

## Patentansprüche

1. Produktausgabevorrichtung, insbesondere für eine landwirtschaftliche Sä- und Düngevorrichtung (10), umfassend:
einen Tank (12, 14) für das auszugebende Produkt; eine Messvorrichtung (76, 78), welche den Durchfluss des Produkts aus dem Tank (12, 14) steuert; ein Verteilungssystem (34) zum Verteilen des Produkts von der Messvorrichtung (76, 78) weg; einen Produktkanal (42, 44), welcher sich zwischen der Messvorrichtung (76, 78) und dem Verteilungssystem (34) erstreckt, wobei die Produktkanäle (42, 44) erste und zweite gegenüberliegende Seiten (46, 48) aufweisen; einen Sensor (108), welcher entlang des Produktkanals (42, 44) angeordnet ist, um den Durchfluss des Produkts aus der Messvorrichtung (76, 78) zu erfassen; und einen Controller (80), welcher eine Benutzereingabe (86) aufweist und betriebsmäßig mit dem Sensor (108) und mit der Messvorrichtung (76, 78) verbunden ist, um automatisch die Messvorrichtung (76, 78) als Reaktion auf die Benutzereingabe (86) und die Ausgabe des Sensors (108) zu steuern, wobei der Sensor (108) wenigstens einen Strahlungssender (110) auf der ersten Seite (46) des Produktkanals (42, 44), wenigstens einen von Strahlungsempfängern (116) auf der zweiten Seite (48) des Produktkanals (42, 44) aufweist, wobei jeder des wenigstens einen Strahlungsempfängers (116) ein elektrisches Ausgabesignal erzeugt, welches die Durchflussrate des Produkts durch den Produktkanal (42, 44) anzeigt, und eine Strahlungssteuerungsvorrichtung (113, 124), um die Strahlung in den wenigstens einen der Empfänger (116) im Wesentlichen senkrecht zur zweiten Seite (48) des Produktkanals (42, 44) zu lenken, **dadurch gekennzeichnet, dass** der Controller (80) ausgelegt ist, um die Durchflussrate des Produkts durch Analyse der Spitzen (162, 164, 166, 168) in den Ausgabesignalen (160) des wenigstens einen der Strahlungsempfänger (116) zu bestimmen, wobei die Signalstärke und die Zeitdauer jedes Signals zur Bestimmung der Durchflussrate betrachtet werden.

2. Vorrichtung nach Anspruch 1, wobei der Sensor (108) eine Mehrzahl von Strahlungssendern (110) und für jeden Sender (110) eine Mehrzahl von Strahlungsempfängern (116) aufweist.

3. Vorrichtung nach Anspruch 1 oder 2, wobei der Controller (80) eine Durchflussrate des Produkts zusätzlich durch Dämpfung der Ausgabesignale (160) von den wenigstens einem der Strahlungsempfänger (116) bestimmt.

4. Vorrichtung nach einem der Ansprüche 1 bis 3, wobei der Sensor (108) betriebsmäßig mit dem Controller (80) mittels eines CAN-Busses verbunden ist.

5. Vorrichtung nach einem der Ansprüche 1 bis 4, wobei die Strahlungssteuerungsvorrichtung (113, 124) auf einer Senderseite des Sensors (108) angeordnet ist.

6. Vorrichtung nach einem der Ansprüche 1 bis 5, wobei die Strahlungssteuerungsvorrichtung (113, 124) auf der Empfängerseite des Sensors (108) angeordnet ist.

7. Vorrichtung nach einem der Ansprüche 1 bis 6, des Weiteren umfassend eine Strahlungssteuerungsvorrichtung (113, 124) sowohl auf der Sender- als auch auf der Empfängerseite des Sensors (108).

8. Vorrichtung nach einem der Ansprüche 1 bis 7, wobei die Strahlungssteuerungsvorrichtung (113) ein Filter, insbesondere ein Film, ist, welcher über wenigstens einem von Sender (110) und Empfänger (116) angeordnet ist.

9. Vorrichtung nach einem der Ansprüche 1 bis 7, wobei die Strahlungssteuerungsvorrichtung (124) ein Tunnel ist, welcher sich zwischen dem Produktkanal (42, 44) und jedem Strahlungsempfänger (116) erstreckt.

10. Vorrichtung nach einem der Ansprüche 1 bis 9, wobei der Controller (80) einen Prozessor (90) umfasst, welcher programmiert ist, um den Durchschnitt der Ausgabesignale von der Mehrzahl der Strahlungsempfänger (116) oder von dem wenigstens einen der Strahlungsempfänger (116) über eine vorbestimmte Zeitspanne zu bilden.

11. Vorrichtung nach einem der Ansprüche 1 bis 10, wobei der Controller (80) einen Prozessor (90) umfasst, welcher programmiert ist, um ein Empfängerdurchschnittsausgabesignal von dem wenigstens einen der Strahlungsempfänger (116) über eine vorbestimmte Zeitspanne zu berechnen und dann ein Sensordurchschnittsausgabesignal durch Berechnen eines Durchschnitts der Empfängerdurchschnittsausgabesignale von dem wenigstens einen der Strahlungsempfänger (116) zu berechnen, wobei die Produktdurchflussrate wenigstens teilweise durch Dämpfung des Sensordurchschnittsausgabesignals bestimmt wird.

12. Verfahren zum Steuern einer Produktdurchflussrate in einer Produktausgabevorrichtung, insbesondere einer landwirtschaftlichen Sä- und Düngevorrichtung (10), wobei die Produktausgabevorrichtung einen Tank (12, 14) für das auszugebende Produkt, eine Messvorrichtung (76, 78), welche den Durchfluss des Produkts aus dem Tank (12, 14) steuert, ein Verteilungssystem (34) zum Verteilen des Produkts von der Messvorrichtung (76, 78) weg, einen Produktkanal (42, 44), welcher sich zwischen der Messvorrichtung (76, 78) und dem Luftverteilungssystem (34) erstreckt, welches erste und zweite gegenüberliegende Seiten (46, 48) haben, aufweist, wobei das Verfahren die folgenden Schritte umfasst: Bereitstellen eines Sensors (108) im Produktkanal (42, 44), wobei der Sensor (108) wenigstens einen Strahlungssender (110) auf der ersten Seite (46) des Produktkanals (46, 48), wenigstens einen von Strahlungsempfängern (116) auf der zweiten Seite (48) des Produktkanals (42, 44) aufweist, wobei jeder des wenigstens einen Strahlungsempfängers (116) ein elektrisches Ausgabesignal (160) erzeugt, welches die Durchflussrate des Produkts durch den Produktkanal (42, 44) anzeigt, und eine Strahlungssteuerungsvorrichtung (113, 124), um die Strahlung in die Empfänger (116) im Wesentlichen senkrecht zur zweiten Seite (48) des Produktkanals (42, 44) zu lenken; Bereitstellen eines Controllers (80), welcher eine Benutzereingabe (86) aufweist und betriebsmäßig mit dem Sensor (108) und mit der Messvorrichtung (76, 78) verbunden ist, um automatisch die Messvorrichtung (76, 78) als Reaktion auf die Benutzereingabe (86) und die Ausgabesignale (160) von dem wenigstens einen der Strahlungsempfänger (116) zu steuern; Analysieren des Ausgabesignals (160) von dem wenigstens einen der Empfänger (116), um eine tatsächliche Produktdurchflussrate zu bestimmen; Vergleichen der tatsächlichen Produktdurchflussrate mit einer angestrebten Produktdurchflussrate; und Steuern der Messvorrichtung (76, 78), um die angestrebte Produktdurchflussrate zu erzeugen, **dadurch gekennzeichnet, dass** der Controller (80) eine Durchflussrate des Produkts durch Analyse der Spitzen (162, 164, 166, 168) in den Ausgabesignalen des wenigstens einen der Strahlungsempfänger (116) bestimmt, wobei die Signalstärke und die Zeitdauer jedes Signals zur Bestimmung der Durchflussrate betrachtet werden.

13. Verfahren nach Anspruch 12, wobei der Controller (80) eine Durchflussrate des Produkts durch Analyse der Spitzen (162, 164, 166, 168) in den Ausgabesignalen des wenigstens einen der Strahlungsempfänger (116) zusätzlich durch Dämpfung des Ausgabesignals von dem wenigstens einen der Strahlungsempfänger (116) bestimmt.

14. Verfahren nach Anspruch 12 oder 13, wobei der Controller einen Prozessor (90) umfasst, welcher programmiert ist, um den Durchschnitt der Ausgabesignale von der Mehrzahl des wenigstens einen der Strahlungsempfänger (116) oder jeweils von dem wenigstens einen der Strahlungsempfänger (116) über eine vorbestimmte Zeitspanne zu bilden.

15. Verfahren nach einem der Ansprüche 12 bis 14, wobei der Controller (80) einen Prozessor (90) umfasst, welcher programmiert ist, um ein Empfängerdurchschnittsausgabesignal von jedem einer Mehrzahl von Strahlungsempfängern (116) über eine vorbestimmte Zeitspanne zu berechnen und dann ein Sensordurchschnittsausgabesignal durch Berechnen eines Durchschnitts der Empfängerdurchschnittsausgabesignale von der Mehrzahl von Strahlungsempfängern (116) zu bestimmen, wobei die Produktdurchflussrate wenigstens teilweise durch Dämpfung des Sensordurchschnittsausgabesignals bestimmt wird.

## Revendications

1. Appareil de distribution de produits, en particulier un instrument agricole (10) de semis et d'épandage d'engrais, comportant : un réservoir (12, 14) destiné à un produit à distribuer ; un doseur (76, 78) régulant le débit de produit en provenance du réservoir (12, 14) ; un système (34) de répartition servant à répartir du produit en provenance du doseur (76, 78) ; un passage (42, 44) de produit s'étendant entre le doseur (76, 78) et le système (34) de répartition, les passages (42, 44) de produit présentant des premier et deuxième côtés opposés (46, 48) ; un capteur (108) situé le long du passage (42, 44) de produit pour détecter le débit de produit en provenance du doseur (76, 78) ; et une commande (80) dotée d'une entrée (86) d'utilisateur et reliée fonctionnellement au capteur (108) et au doseur (76, 78) pour commander automatiquement le doseur (76, 78) en réaction à l'entrée (86) d'utilisateur et à la sortie provenant du capteur (108), le capteur (108) étant doté d'au moins un émetteur (110) de rayonnement du premier côté (46) du passage (42, 44) de produit, d'au moins un récepteur (116) de rayonnement du deuxième côté (48) du passage (42, 44) de produit, le récepteur ou chacun des récepteurs (116) de rayonnement générant un signal électrique de sortie indicatif du débit du produit à travers le passage (42, 44) de produit, et un dispositif (113, 124) de contrôle de rayonnement servant à diriger le rayonnement dans le ou les récepteurs (116) sensiblement perpendiculairement au deuxième côté (48) du passage (42, 44) de produit, **caractérisé en ce que** la commande (80) est prévue pour déterminer un débit du produit par l'analyse de pics (162, 164, 166, 168) dans les signaux (160) de sortie du ou des récepteurs (116) de rayonnement, la force du signal et la durée de chaque signal étant prises en considération pour la détermination du débit.

2. Appareil selon la revendication 1 le capteur (108) étant doté d'une pluralité d'émetteurs (110) de rayonnement et, pour chaque émetteur (110), d'une pluralité de récepteurs (116) de rayonnement.

3. Appareil selon la revendication 1 ou 2, la commande (80) déterminant en outre un débit du produit par l'atténuation des signaux (160) de sortie en provenance du ou des récepteurs (116) de rayonnement.

4. Appareil selon l'une des revendications 1 à 3, le capteur (108) étant relié fonctionnellement à la commande (80) via un bus CAN.

5. Appareil selon l'une des revendications 1 à 4, le dispositif (113, 124) de contrôle de rayonnement étant situé d'un côté émetteur du capteur (108).

6. Appareil selon l'une des revendications 1 à 5, le dispositif (113, 124) de contrôle de rayonnement étant situé du côté récepteur du capteur (108).

7. Appareil selon l'une des revendications 1 à 6 comportant en outre un dispositif (113, 124) de contrôle de rayonnement à la fois sur les côtés émetteur et récepteur du capteur (108).

8. Appareil selon l'une des revendications 1 à 7, le dispositif (113) de contrôle de rayonnement étant un filtre, en particulier un film, placé pardessus l'émetteur (110) et / ou le récepteur (116).

9. Appareil selon l'une des revendications 1 à 7, le dispositif (124) de contrôle de rayonnement étant un tunnel s'étendant entre le passage (42, 44) de produit et chaque récepteur (116) de rayonnement.

10. Appareil selon l'une des revendications 1 à 9, la commande (80) comprenant un processeur (90) programmé pour effectuer la moyenne des signaux de sortie de la pluralité de récepteurs (116) de rayonnement, ou du récepteur ou de chacun des récepteurs (116) de rayonnement sur une durée prédéterminée.

11. Appareil selon l'une des revendications 1 à 10, la commande (80) comprenant un processeur (90) programmé pour calculer un signal moyen de sortie de récepteurs du récepteur ou de chacun des récepteurs (116) de rayonnement sur une durée prédéterminée, puis pour déterminer un signal moyen de sortie de capteurs en calculant une moyenne des signaux moyens de sortie de récepteurs du ou des récepteurs (116) de rayonnement, le débit de produit étant déterminé au moins en partie par l'atténuation du signal moyen de sortie de capteurs.

12. Procédé de commande du débit de produit dans un appareil de distribution de produits, en particulier un instrument agricole (10) de semis et d'épandage d'engrais, l'appareil de distribution de produits comprenant un réservoir (12, 14) destiné au produit à distribuer, un doseur (76, 78) servant à commander le débit de produit en provenance du réservoir (12, 14), un système (34) de répartition servant à répartir du produit en provenance du doseur (76, 78), un passage (42, 44) de produit s'étendant entre le doseur (76, 78) et le système (34) de répartition à air présentant des premier et deuxième côtés opposés (46, 48), le procédé comportant les étapes consistant à : installer un capteur (108) dans le passage (42, 44) de produit, le capteur (108) comportant au moins un émetteur (110) de rayonnement du premier côté (46) du passage (46, 48) de produit, au moins un récepteur (116) de rayonnement du deuxième côté (48) du passage (42, 44) de produit, le récepteur ou chacun des récepteurs (116) de rayonnement générant un signal électrique (160) de sortie indicatif du débit du produit à travers le passage (42, 44) de produit, et un dispositif (113, 124) de contrôle de rayonnement servant à diriger un rayonnement dans les récepteurs (116) sensiblement perpendiculairement au deuxième côté (48) du passage (42, 44) de produit ; mettre en place une commande (80) dotée d'une entrée (86) d'utilisateur et reliée fonctionnellement au capteur (108) et au doseur (76, 78) pour commander automatiquement le doseur (76, 78) en réaction à une entrée (86) d'utilisateur et aux signaux (160) de sortie en provenance du ou des récepteurs (116) de rayonnement ; analyser le signal (160) de sortie en provenance du ou des récepteurs (116) pour déterminer un débit réel de produit ; comparer le débit réel de produit à un débit souhaité de produit ; et commander le doseur (76, 78) de façon à produire le débit souhaité de produit, **caractérisé en ce que** la commande (80) détermine un débit du produit par l'analyse de pics (162, 164, 166, 168) dans les signaux de sortie du ou des récepteurs (116) de rayonnement, la force du signal et la durée de chaque signal étant prises en considération pour la détermination du débit.

13. Procédé selon la revendication 12, la commande (80) déterminant en outre un débit du produit par l'analyse de pics (162, 164, 166, 168) dans les signaux de sortie du ou des récepteurs (116) de rayonnement par l'atténuation du signal de sortie en provenance du ou des récepteurs (116) de rayonnement.

14. Procédé selon la revendication 12 ou 13, la commande comprenant un processeur (90) programmé pour effectuer la moyenne des signaux de sortie de la pluralité de récepteurs (116) de rayonnement, ou du récepteur ou de chacun des récepteurs (116) de rayonnement sur une durée prédéterminée.

15. Procédé selon l'une des revendications 12 à 14, la commande (80) comprenant un processeur (90) programmé pour calculer un signal moyen de sortie de récepteurs de chaque récepteur parmi une pluralité de récepteurs (116) de rayonnement sur une durée prédéterminée, puis pour déterminer un signal moyen de sortie de capteurs en calculant une moyenne des signaux moyens de sortie de récepteurs de la pluralité de récepteurs (116) de rayonnement, le débit de produit étant déterminé au moins en partie par l'atténuation du signal moyen de sortie de capteurs.
